# EUROPÄISCHE PATENTSCHRIFT

(11) **EP 0 687 946 B1**
(45) Veröffentlichungstag und Bekanntmachung des Hinweises auf die Patenterteilung: **04.10.2001**
(21) Anmeldenummer: 95108594.3
(22) Anmeldetag: 06.06.1995
(51) Int. Cl.: G03B 27/46, G03B 27/47

(54) **Verfahren zum Erstellen von fotografischen Kopien und fotografisches Kopiergerät**
Process for making photographic copies and photographic copying apparatus
Procédé pour la production de copies photographiques et appareil photographique de copiage

(30) Priorität: 15.06.1994 DE 4420823
(43) Veröffentlichungstag der Anmeldung: 20.12.1995
(73) Patentinhaber: Agfa-Gevaert AG, 51373 Leverkusen (DE)
(72) Erfinder: Benker, Gerhard, D-82057 Icking (DE); Treiber, Helmut, Dr., D-81479 München (DE); Klüter, Ulrich, Dr., D-80638 München (DE); Lorenz, Bernhard, D-85354 Freising (DE); Münch, Reimund, Dr., D-81543 München (DE)

(56) Entgegenhaltungen:
- EP-A- 0 567 166
- DE-A- 3 343 336
- DE-A- 3 817 138
- DE-A- 4 126 578
- GB-A- 1 470 470
- US-A- 4 174 174

## Beschreibung

Die Erfindung geht aus von einem Verfahren nach dem Oberbegriff von Anspruch 1 und einem fotografischen Kopiergerät nach dem Oberbegriff von Anspruch 12.

In letzter Zeit tritt nicht nur bei Berufsfotografen, sondern immer mehr auch bei Hobby-Fotografen ein Bedarf an sogenannten Ausschnittsvergrößerungen, d. h. einem Papierabzug, auf dem nur ein Teil des Originals vergrößert aufbelichtet ist, zutage. Immer häufiger taucht ebenso der Wunsch nach sogenannten Indexprints auf, also nach Papierbildern normaler Größe, auf die die Einzelbilder eines ganzen Films in stark verkleinertem Maßstab aufbelichtet sind. Diese Indexprints wurden früher im Fotolabor durch Kontaktkopieren der Filmstreifen auf Schwarzweißpapier angefertigt. Einerseits dienten sie als Archivierungshilfe, andererseits ließen sich Kunden solche Kontaktkopien anfertigen, um vor der Bestellung der endgültigen Kopien die kopierwürdigen Vorlagen auswählen zu können. Kontaktabzüge wurden jedoch wegen des großen personellen Aufwands nur noch von wenigen Labors angeboten.

In neueren Professional-Printern, d. h. in fotografischen Kopiergeräten, die für den Fachfotografen konzipiert wurden, sind daher z. T. bereits Filmbühnen vorgesehen, die auf einem XY-Schlitten montiert sind. Diese Negativbühnen sind jedoch zum einen sehr aufwendig und teuer und können zum anderen nicht bei Hochleistungskopiergeräten eingesetzt werden, bei denen eine Vielzahl von Filmen zu einem Band verbunden werden und dieses Band die Kopierstation durchläuft. Da bei Kopiergeräten dieser Art die Filme vor der Kopierstation von einer Spule ab- und nach der Kopierstation wieder auf eine Spule aufgewickelt werden, ist ein Verschieben des Filmstreifens praktisch in einer Richtung quer zur Transportrichtung nicht möglich.

Aus der DE 33 43 336 A ist eine Einrichtung, insbesondere zum Kopieren von Disk-Filmen bekannt, welche eine Papierbühne aufweist, die quer zur eigentlichen Papierförderrichtung verschiebbar ist. Mit dieser Einrichtung lassen sich Blätter für Fotoalben erzeugen, auf die jeweils eine Vielzahl von einzelnen Vorlagen hinter- und nebeneinander aufbelichtet sind.

Es war die Aufgabe der Erfindung, ein Verfahren zu entwickeln, mit dem die Erstellung insbesondere von Indexprints oder Ausschnittsvergrößerungen auf einfache Weise ermöglicht wird und das auch für entsprechend ausgerüstete Hochleistungskopiergeräte geeignet ist. Ebenso sollte ein für dieses Verfahren geeignetes Kopiergerät geschaffen werden.

Gelöst wird die Aufgabe durch ein Verfahren mit den kennzeichnenden Merkmalen des ersten Anspruchs und durch ein fotografisches Kopiergerät mit den kennzeichnenden Merkmalen von Anspruch 12. Die Durchführung des Verfahrens wird beispielsweise mit einem fotografischen Kopiergerät ermöglicht, dessen Papierlauf senkrecht zum Filmlauf ausgerichtet ist. Hierdurch kann der Film in der einen Richtung und das Papier senkrecht dazu in einer zweiten Richtung verschoben werden, so daß es zu einer Relativbewegung zwischen Film und Papier kommt, die die Abbildung einer Vorlage oder eines bestimmten Bereiches einer Vorlage auf einen beliebigen Bereich des gewählten Papierformats möglich macht. Diese Relativpositionen von Film und Papier lassen sich insoweit vorprogrammieren, daß eine vollautomatische Erstellung von Indexprints durchführbar ist. Ausschnittsvergrößerungen sollen dagegen weiterhin manuell beeinflußbar bleiben, so daß hier Geschmack und Fachwissen des Profi-Fotografen in das Bildergebnis Eingang finden.

Geht man - wie bei herkömmlichen Kopiergeräten üblich - von parallelem Film- und Papierlauf aus, so sind insbesondere solche Geräte für das Verfahren geeignet, bei denen das Papier vor dem Einlauf in die Kopierstation zu Einzelblättern geschnitten wird. In der DE-OS 41 26 578 ist ein fotografisches Kopiergerät gezeigt, bei dem das Papier auf der Positivbühne bereits als Einzelblatt vorliegt. Die Positivbühne ist hier mit Mitteln versehen, die ein Drehen des Einzelblattes ermöglichen. Dies hat den Zweck, daß mit nur einer Papierbandbreite zwei verschiedene Kopienformate erstellt werden können. Hierzu wird die Breite des Papierbandes einmal als Längsseite und einmal als Breitseite der Kopie verwendet.

Bei einem Kopiergerät dieser Art besteht die Möglichkeit, das Einzelblatt lediglich durch Drehen über verschiedene Drehpunkte in eine Position zu bringen, die einem Versatz senkrecht zur Förderrichtung des Films gleichkommt. Hierzu wird das Blatt beispielsweise erst um 90° um seinen Mittelpunkt gedreht, worauf der Drehstempel gegenüber dem Einzelblatt oder aber das Einzelblatt gegenüber dem Drehstempel in normaler Förderrichtung bis zu einem neuen Drehpunkt verschoben wird und über diesen neuen Drehpunkt ein Zurückdrehen des Blattes erfolgt. Danach kann das Blatt wieder in normaler Durchlaufrichtung so verfahren werden, daß der gewünschte Bereich im Belichtungsstrahlengang liegt.

Weitere Einzelheiten und Vorteile der Erfindung ergeben sich aus den Unteransprüchen in Zusammenhang mit der Beschreibung eines Ausführungsbeispiels, das anhand der Zeichnung eingehend erläutert wird.

Es zeigen:
- Fig. 1: die Kopierstation eines fotografischen Kopiergerätes, welches zur Durchführung des erfindungsgemäßen Verfahrens geeignet ist,
- Fig. 2: ein Ausführungsbeispiel der Positivbühne der in Fig. 1 dargestellten Kopierstation,
- Fig. 3: einen Ablaufplan zweier Möglichkeiten zur Durchführung des Verfahrens,
- Fig. 4: einen erfindungsgemäß erstellten Indexprint,
- Fig. 5: einen erfindungsgemäßen Packageprint und
- Fig. 6: eine schematische Darstellung zur Erstellung einer Ausschnittsvergrößerung.

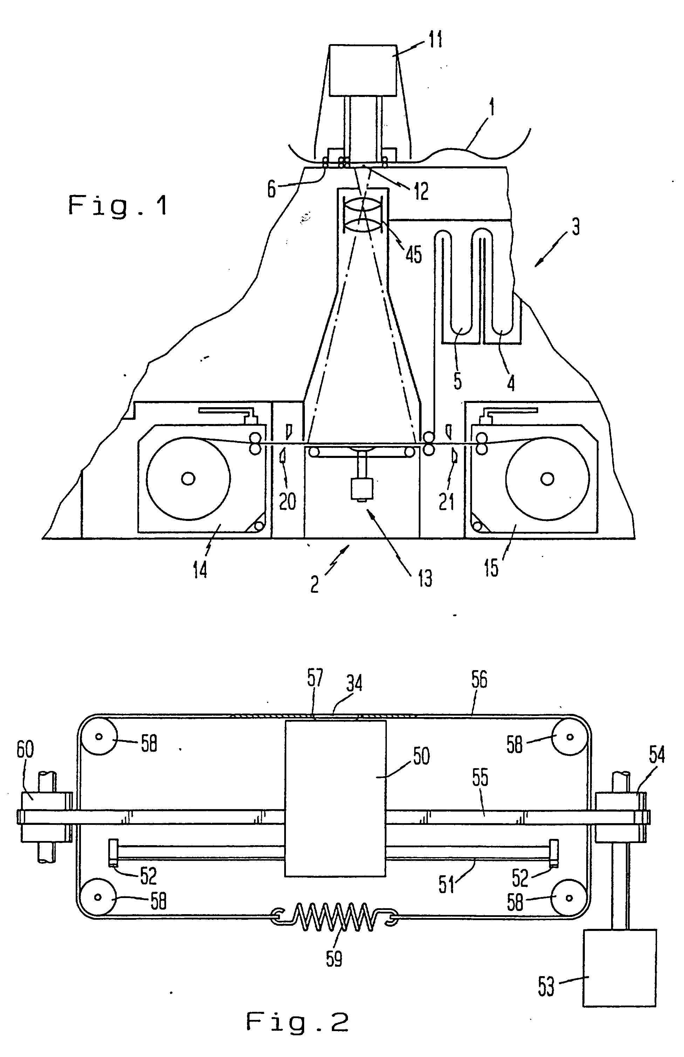

Fig. 1 zeigt die Kopierstation eines Minilabs, in dem Einzelblätter belichtet und entwickelt werden. Die Kopierstation ist mit 2 bezeichnet, die Papierentwicklung 3 ist nur noch durch die beiden Tauchbecken 4 und 5 angedeutet. Die Kopierstation 2 besteht aus einer Beleuchtungseinrichtung 11, der Vorlagenbühne 12 mit den Transportrollen 6 für den Film 1, dem Zoom-Objektiv 45, der Papierbühne 13 und der Zuführung für das Kopierpapier mit den beiden Kassetten 14 und 15.

Um mehrere Kopierformate ohne Wechsel der Papierkassetten erzeugen zu können, sind die Kassetten 14 und 15 vorteilhafterweise mit verschiedenen Papierbreiten bestückt. Aus der jeweils dem gewünschten Format entsprechenden Kassette wird Papier auf die Positivbühne 13 transportiert und von einer Schneidvorrichtung 20, 21 abgetrennt. Die belichteten Papierblätter werden von der Positivbühne 13 abgezogen und in nicht näher beschriebener Weise durch die einzelnen Behandlungsbäder der Papierentwicklung 3 gefördert. Danach durchlaufen sie noch einen nicht dargestellten Trockner und werden in einer Ausgabestation gestapelt.

Die in Fig. 2 gezeigte Positivbühne ermöglicht es, von einem lichtempfindlichen Papierband abgeschnittene Einzelblätter beliebig zu drehen. Der Drehteller 34 ist mit dem hier nicht dargestellten Drehantrieb in einem Schlitten 50 untergebracht. Der Schlitten ist auf Gleitstangen 51 mit den Anschlägen 52 geführt. Die Bewegung des Schlittens erfolgt über den Motor 53, der über die Antriebsrolle 54 den mit dem Zahnriemen 55 verbundenen Schlitten antreibt. Der Zahnriemen wird durch die Antriebsrolle 54 und die Umlenkrolle 60 aufgespannt. An dem Schlitten 50 ist das Band 56 befestigt, das einen Ausschnitt 57 für den Drehteller 34 aufweist. Die Oberfläche des Bandes 56 und des Drehtellers 34 sind bündig. Das Band 56 ist über die Umlenkrollen 58 auf die Unterseite der Papierbühne geführt. Um das Band einfacher montieren zu können, wird bevorzugt kein Endlosband verwendet, sondern es werden die beiden freien Enden über die Feder 59 miteinander verbunden.

Wird nun der Schlitten 50 in eine Position zum Aufnehmen eines Einzelblattes zu einem der Anschläge 52 bewegt, so bewegt sich das Band 56 zusammen mit dem Schlitten. Befindet sich der Drehteller 34 unter dem Einzelblatt, so wird eine hier nicht dargestellte Pumpe eingeschaltet, die sich ebenfalls im Schlitten 50 befindet. Ist das Blatt angesaugt, so wird der Schlitten in die Belichtungsposition bewegt. Entsprechend dem gewünschten Format kann das Blatt nun belichtet oder durch den Drehteller 34 um 90° gedreht werden. Ist die Saugwirkung entsprechend stark ausgelegt, kann darauf verzichtet werden, daß der Drehteller während des Drehvorganges angehoben werden muß. Sobald sich das Blatt in seiner Belichtungsposition befindet, wird es vollflächig auf der Papierbühne angesaugt. Hierzu sind die Auflageflächen beiderseits des Bandes mit Luftöffnungen versehen. Ebenso kann das Band 56 selbst entsprechende Öffnungen aufweisen.

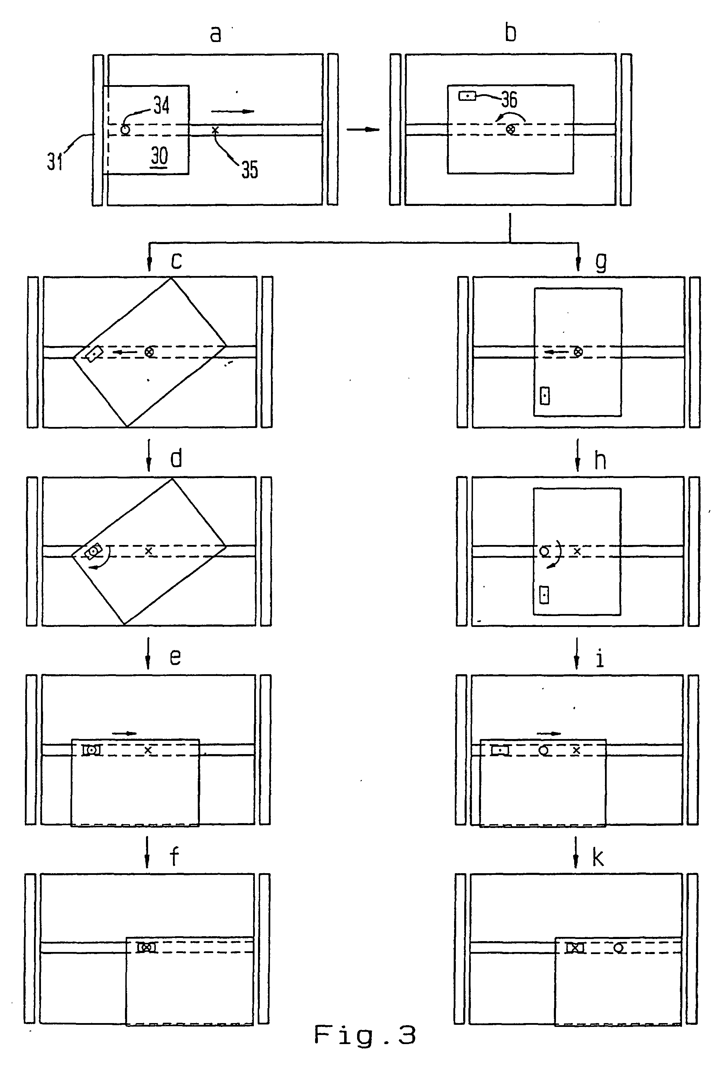

Fig. 3 zeigt nun zwei Möglichkeiten auf, wie mit Hilfe der oben beschriebenen Kopierstation zur Erstellung von Indexprints, Packageprints oder von Ausschnittvergrößerungen praktisch jeder Punkt eines Einzelblattes zur Deckung mit der optischen Achse des Abbildungssystems 45 gebracht werden kann. Bild a zeigt, wie der Drehteller 34 das Einzelblatt 30 von den Transportwalzen 31 übernimmt. Nachdem der Drehteller das Blatt über Vakuum angesaugt hat, positioniert er es so auf der Positivbühne, daß der Mittelpunkt des Blattes durch die optische Achse 35 des Systems geschnitten wird (Bild b). Mit dem Rechteck 36 ist der Bereich bezeichnet, der beispielsweise zur Erstellung eines Indexprints mit einer Einzelvorlage belichtet werden soll und daher in die Mitte der Positivbühne gebracht werden soll. Eine erste Möglichkeit zur Erreichung dieses Ziels ist durch die Bilder c, d, e und f beschrieben.

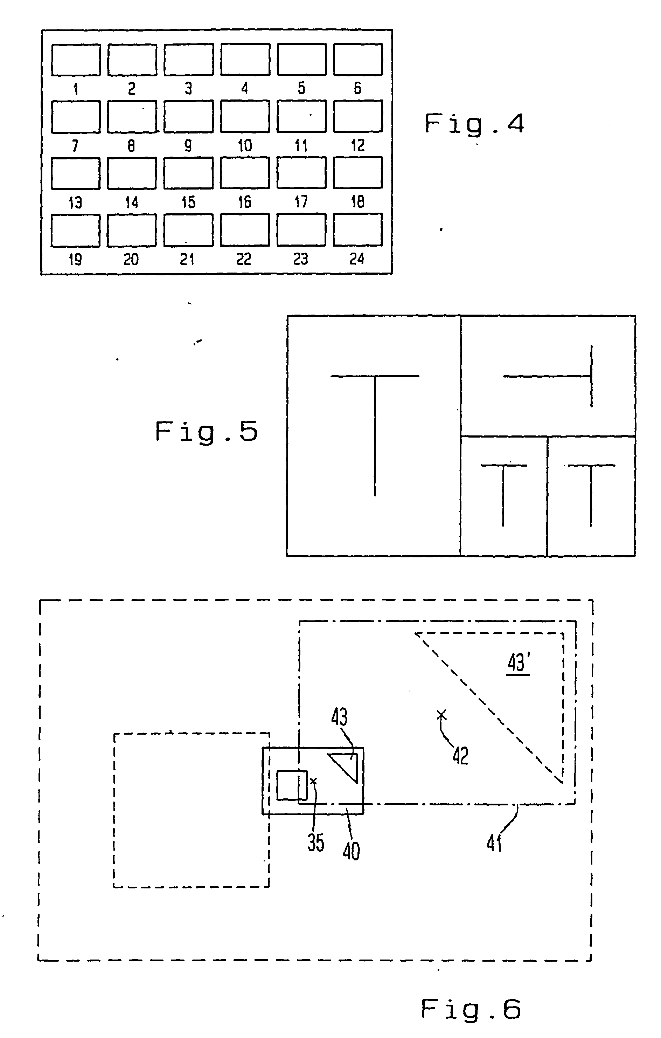

Das Einzelblatt wird mit Hilfe des Drehtellers 34 so weit gedreht, bis der Mittelpunkt des Rechtecks 36 auf der Längsmittellinie der Papierförderebene liegt (Bild c). Nach Abschalten des Vakuums verläßt der Drehteller 34 seine Position in der optischen Achse des Systems und bewegt sich bis zum Mittelpunkt des Rechtecks 36 (Bild d). Hat der Drehteller diese Stellung erreicht, wird das Vakuum wieder aufgebaut und das Blatt entgegen der ersten Drehrichtung um den gleichen Winkel zurückgedreht (Bild e). Nun verfährt der Drehteller 34 zusammen mit dem Blatt 30 so weit, bis die optische Achse 35 des Abbildungssystems durch seinen Mittelpunkt geht (Bild f). In dieser Stellung wird das Blatt 30 nun vollflächig angesaugt und die Belichtung mit der ersten Vorlage für den Indexprint, wie er in Fig. 4 dargestellt ist, kann durchgeführt werden. Eine weitere Möglichkeit, um das Blatt 30 in die gleiche Endstellung zu bringen, wird durch die Bilder g, h, i und k beschrieben.

Ausgehend von der in Bild b gezeigten Stellung, wird das Blatt 30 um volle 90° gedreht (Bild g). Durch Abschalten des Vakuums löst sich der Drehteller 34 nun vom Blatt und verfährt so weit, daß er senkrecht zu dem Rechteck 36 steht (Bild h). Nun wird das Vakuum wieder aufgebaut und die Rückdrehung des Blattes 30 durchgeführt. Nach dieser 90°-Drehung ist es in der in Bild i gezeigten Position. Danach bewegt sich der Drehteller 34 zusammen mit dem Blatt 30 so weit, daß wiederum der Mittelpunkt des Rechteckes 36 unter die optische Achse 35 zu liegen kommt (Bild k). Diese Endstellung unterscheidet sich insoweit von derjenigen in Bild f, daß hier der Drehteller 34 während des Belichtungsvorgangs nicht deckungsgleich mit der optischen Achse ist, was sich jedoch kaum negativ auswirken dürfte.

Wenn die Positivbühne entsprechend groß ausgelegt ist, wird es auch möglich, das Blatt 30 gleich bei der Übergabe von den Transportrollen 31 zu dem Drehteller 34 so weit auf die Bühne zu ziehen, daß bereits mit der ersten Drehung der Mittelpunkt des Rechtecks 36 unter die optische Achse zu liegen kommt. Auf diese Weise braucht der Drehteller nur noch in die optische Achse zurück verfahren werden, um die Rückdrehung des Blattes vorzunehmen. Ein weiteres Verfahren ist bei diesem Beispiel nicht mehr notwendig.

Um die Positionierung noch weiter zu beschleunigen, besteht auch die Möglichkeit, die Rotations- und Linearbewegung des Drehtellers nicht seriell, sondern parallel ablaufen zu lassen.

Auf die beschriebenen Arten sind alle Punkte des Einzelblattes in gleicher Weise in den Belichtungsstrahlengang zu bringen. Auf eine Beschreibung, wie weitere Punkte zu erreichen sind, soll daher verzichtet werden.

Mit dem oben beschriebenen Verfahren bestehen nun die verschiedensten Möglichkeiten. So kann z. B. von dem Filmstreifen 1 (Fig. 1) der in Fig. 4 beschriebene Indexprint angefertigt werden. Hierzu wird zuerst der Bereich für das erste Bild auf eine der in Fig. 3 beschriebenen Möglichkeiten in den Belichtungsstrahlengang gebracht. Nach dem Kopiervorgang muß das Blatt für die folgenden Einzelbelichtungen 2 bis 6 nur noch linear verfahren werden. Erst beim Wechsel in die zweite Zeile für die Bilder 7 bis 12 muß das Blatt wieder über zwei unterschiedliche Drehpunkte rotiert werden. Auf diese Weise kann jeweils der Zeilenwechsel vollzogen und danach die komplette Zeile durchbelichtet werden.

Um insbesondere Nachbestellungen zu erleichtern, ist es sinnvoll, wenn zu jeder Einzelvorlage auch die Bildnummer, die vom Film gelesen werden kann, beispielsweise über ein LED-Array einbelichtet wird.

In gleicher Weise kann ein Packageprint erstellt werden, wie es in Fig. 5 gezeigt ist. Hierzu werden nach einem festgelegten Programm jeweils die späteren Mittelpunkte der Einzelbilder unter die optische Achse gebracht und der Abbildungsmaßstab durch Verfahren des Zoomobjektivs 45 entsprechend geändert.

Die Einzelbelichtungen werden immer mit dem gleichen Vorlagennegativ durchgeführt. Es ist auch möglich, mehrere fertige Programme zur Erstellung verschiedener Packageprints abzuspeichern.

Eine weitere Anwendung für das erfindungsgemäße Verfahren ist die Erstellung von Ausschnittsvergrößerungen. In Fig. 6 ist ein Musternegativ 40 durchgezeichnet dargestellt. Die optische Achse 35 geht durch die Mitte des Testnegativs 40. Das vergrößerte Abbild dieses Mustemegativs auf der Positivbühne ist gestrichelt gezeichnet. Ein Blatt lichtempfindliches Fotopapier wird nun nach dem beschriebenen Verfahren so positioniert, daß die Blattmitte 42 einen Abstand zur optischen Achse 35 aufweist. Dieser Abstand und die Richtung der Verschiebung hängen sowohl von dem Ausschnitt als auch vom Abbildungsmaßstab ab. Beim anschließenden Kopiervorgang wird auf das strichpunktiert gezeichnete Einzelblatt 41 nur noch das stark vergrößerte Abbild 43' des Dreiecks 43 auf dem Musternegativ 40 aufbelichtet.

## Patentansprüche

1. Verfahren zum Erstellen von fotografischen Kopien unterschiedlichen Formats einer transparenten Vorlage auf lichtempfindliches Papier mit Hilfe einer optischen Abbildungseinrichtung, bei dem sowohl die transparente Vorlage als auch das lichtempfindliche Papier in einer Förderrichtung durch eine Kopierstation gefördert werden , wobei das lichtempfindliche Papier in der Papierebene um einen ersten Punkt gedreht und um einen anderen, zweiten Punkt in der Papierebene in der Weise weiter- oder rückgedreht wird, daß das lichtempfindliche Papier quer zu seiner Förderrichtung versetzt wird.

2. Verfahren nach Anspruch 1, **dadurch gekennzeichnet, daß** das lichtempfindliche Papier ein bestimmtes Format aufweist und **daß** die Abbildungseinrichtung auf so einen Abbildungsmaßstab eingestellt wird, **daß** bei dem Kopiervorgang ein Abbild der transparenten Vorlage erzeugt wird, welches kleiner oder größer als das bestimmte Papierformat ist.

3. Verfahren nach Anspruch 2, **dadurch gekennzeichnet, daß** das Papier als Einzelblatt parallel zu dem Filmstreifen durch die Kopierstation gefördert wird.

4. Verfahren nach Anspruch 2, **dadurch gekennzeichnet, daß** der erste Punkt auf der Längsmittellinie der Papierförderebene liegt.

5. Verfahren nach Anspruch 4, **dadurch gekennzeichnet, daß** das Papier so weit um den ersten Punkt gedreht wird, **daß** der Punkt, in dem nach der Positionierung und vor der Belichtung des Papiers die optische Achse der Abbildungseinrichtung das Einzelblatt schneiden soll, auf der Längsmittellinie der Papierförderebene liegt.

6. Verfahren nach Anspruch 5, **dadurch gekennzeichnet, daß** auf einem Einzelblatt mehrere Kopien einer Einzelvorlage erstellt werden.

7. Verfahren nach Anspruch 6, **dadurch gekennzeichnet, daß** die Kopien in verschiedenen Abbildungsmaßstäben erstellt werden.

8. Verfahren nach Anspruch 5, **dadurch gekennzeichnet, daß** auf einem Einzelblatt mehrere Kopien unterschiedlicher Einzelvorlagen erstellt werden.

9. Verfahren nach Anspruch 8, **dadurch gekennzeichnet, daß** zu jeder Einzelvorlage elektronisch eine Bildnummer aufbelichtet wird.

10. Verfahren nach Anspruch 8, **dadurch gekennzeichnet, daß** auf das Einzelblatt elektronisch eine Filmidentifikationsnummer aufbelichtet wird.

11. Verfahren nach Anspruch 5, **dadurch gekennzeichnet, daß** auf ein Einzelblatt ein bestimmter Bereich einer Einzelvorlage mit vergrößertem Abbildungsmaßstab aufbelichtet wird.

12. Fotografisches Kopiergerät zum Erstellen von fotografischen Kopien unterschiedlichen Formats einer transparenten Vorlage auf lichtempfindliches Papier mit einer Kopierstation (2), die eine Beleuchtungseinrichtung (11), einen Halter (12) für eine transparente Vorlage (1), eine optische Abbildungseinrichtung (45) mit veränderbarem Abbildungsmaßstab und eine Positivbühne (13) für das lichtempfindliche Papier (30) aufweist, einer ersten Transporteinrichtung (6), die eine transparente Vorlage (1) durch die Kopierstation (2) fördert, einer zweiten Transporteinrichtung (31, 34), die das lichtempfindliche Papier (30) in einer Förderrichtung durch die Kopierstation (2) fördert und einer Steuereinrichtung, die den Papiertransport regelt, wobei die Positivbühne Drehmittel zum Drehen des lichtempfindlichen Papiers in der Papierebene und Mittel zur relativen Verschiebung von lichtempfindlichen Papier zum Drehmittel in Förderrichtung aufweist, wobei die Steuereinrichtung, die Drehmittel und die Mittel zur relativen Verschiebung so ausgebildet sind, dass das lichtempfindliche Papier in der Papierebene um einen ersten Punkt drehbar ist und nach der Relativverschiebung um einen anderen, zweiten Punkt in der Papierebene in der Weise weiter- oder rückdrehbar ist, dass das lichtempfindliche Papier nach Ausführung der Dreh- und Relativbewegung quer zur Förderrichtung verschoben ist.

13. Fotografisches Kopiergerät nach Anspruch 12, **dadurch gekennzeichnet, daß** die erste (6) und die zweite Transporteinrichtung (31, 34) parallel angeordnet sind.

14. Fotografisches Kopiergerät nach Anspruch 12, **dadurch gekennzeichnet, daß** in der Positivbühne (13) ein Drehteller (34) vorgesehen ist, der sowohl drehbar als auch in Förderrichtung des Papiers verschiebbar ausgebildet ist.

15. Fotografisches Kopiergerät nach Anspruch 14, **dadurch gekennzeichnet, daß** der Drehteller (34) entlang der Längsmittellinie der Papierförderebene verschiebbar ist.

## Claims

1. Process for producing photographic copies of different formats of a transparent original on light-sensitive paper by means of an optical imaging device in which both the transparent original and the light-sensitive paper are conveyed in one conveying direction through a copying apparatus, wherein the light-sensitive paper is rotated in the plane of the paper about a first point and is rotated further or rotated back about another, second point in the plane of the paper in such a way that the light-sensitive paper is displaced transversely to its conveying direction.

2. Process according to claim 1, **characterised in that** the light-sensitive paper has a specific format and that the imaging device is adjusted to an imaging scale so that in the copying procedure an image of the transparent original is produced that is smaller or larger than the specific paper format.

3. Process according to claim 2, **characterised in that** the paper is conveyed through the copying apparatus as an individual sheet parallel to the film strip.

4. Process according to claim 2, **characterised in that** the first point lies on the longitudinal middle line of the paper-conveying plane.

5. Process according to claim 4, **characterised in that** the paper is rotated by such an amount about the first point that the point at which, after the positioning and before the illumination of the paper, the optical axis of the imaging device should intersect the individual sheet lies on the longitudinal middle line of the paper-conveying plane.

6. Process according to claim 5, **characterised in that** several copies of a single original are produced on a single sheet.

7. Process according to claim 6, **characterised in that** the copies are produced in different imaging scales.

8. Process according to claim 5, **characterised in that** several copies of different individual originals are produced on a single sheet.

9. Process according to claim 8, **characterised in that** an image number is exposed electronically on each individual original.

10. Process according to claim 8, **characterised in that** a film identification number is exposed electronically on the single sheet.

11. Process according to claim 5, **characterised in that** on a single sheet a specific region of a single original is exposed with an enlarged imaging scale.

12. Photographic printer for producing photographic copies of different formats of a transparent original on light-sensitive paper by using a copying apparatus (2) that comprises an illuminating device (11), a holder (12) for a transparent original (1), an optical imaging device (45) with adjustable imaging scale and a positive print platform (13) for the light-sensitive paper (30), a first transporting device (6) that conveys a transparent original (1) through the copying apparatus (2), a second transporting device (31, 34) that conveys the light-sensitive paper (30) in a conveying direction through the copying apparatus (2), and a control device that regulates the paper transportation, wherein the positive print platform comprises rotational means for rotating the light-sensitive paper in the plane of the paper and means for displacing the light-sensitive paper relative to the rotational means in the conveying direction, and wherein the control device, the rotational means and the means for the relative displacement are designed and arranged so that the light-sensitive paper can be rotated about a first point in the plane of the paper and after the relative displacement can be rotated further or rotated back about another, second point in the plane of the paper in such a way that the light-sensitive paper is displaced transversely to the conveying direction after having executed the rotational movement and relative movement.

13. Photographic printer according to claim 12, **characterised in that** the first conveying device (6) and the second conveying device (31, 34) are arranged parallel to one another.

14. Photographic printer according to claim 12, **characterised in that** a rotating plate (34) is provided in the positive print platform (13), the plate being designed so that it can rotate and can also be displaced in the conveying direction of the paper.

15. Photographic printer according to claim 14, **characterised in that** the rotating plate (34) can be displaced along the longitudinal middle line of the paper-conveying plane.

## Revendications

1. Procédé pour élaborer des copies photographiques de différents formats d'un document original transparent sur du papier photosensible à l'aide d'un dispositif de reproduction optique, dans lequel on transporte aussi bien le document original transparent que le papier photosensible dans un sens de transport à travers un poste de copie, tandis que l'on tourne le papier photosensible dans le plan du papier autour d'un premier point et on continue de le tourner ou on le retourne autour d'un deuxième autre point dans le plan du papier de manière à déplacer le papier photosensible transversalement par rapport à son sens de transport.

2. Procédé selon la revendication 1, **caractérisé en ce que** le papier photosensible a un. format déterminé et **en ce qu'**on règle le dispositif de reproduction sur une telle échelle de reproduction que, lors de l'opération de copie, on produit une reproduction du document original transparent qui est plus petite ou plus grande que le format de papier déterminé.

3. Procédé selon la revendication 2, **caractérisé en ce qu'**on transporte le papier en feuille individuelle parallèlement à la bande de film à travers le poste de copie.

4. Procédé selon la revendication 2, **caractérisé en ce que** le premier point se trouve sur la ligne médiane longitudinale du plan de transport du papier.

5. Procédé selon la revendication 4, **caractérisé en ce qu'**on tourne le papier autour du premier point jusqu'à ce que le point, auquel l'axe optique du dispositif de reproduction doit couper la feuille individuelle après le positionnement et avant l'exposition du papier à la lumière, se trouve sur la ligne médiane longitudinale du plan de transport du papier.

6. Procédé selon la revendication 5, **caractérisé en ce qu'**on élabore sur une feuille individuelle plusieurs copies d'un document original individuel.

7. Procédé selon la revendication 6, **caractérisé en ce qu'**on élabore les copies dans différentes échelles de reproduction.

8. Procédé selon la revendication 5, **caractérisé en ce qu'**on élabore sur une feuille individuelle plusieurs copies de différents documents originaux individuels.

9. Procédé selon la revendication 8, **caractérisé en ce qu'**on appose par exposition de façon électronique un numéro d'image pour chaque document original individuel.

10. Procédé selon la revendication 8, **caractérisé en ce qu'**on appose par exposition de façon électronique un numéro d'identification de film sur la feuille individuelle.

11. Procédé selon la revendication 5, **caractérisé en ce qu'**on appose par exposition sur une feuille individuelle une zone déterminée d'un document original individuel avec une échelle de reproduction agrandie.

12. Copieur photographique pour élaborer des copies photographiques de différents formats d'un document original transparent sur du papier photosensible avec un poste de copie (2), qui comporte un dispositif d'exposition (11), un dispositif de maintien (12) pour un document original transparent (1), un dispositif de reproduction optique (45) avec échelle de reproduction variable et une plate-forme positive (13) pour le papier photosensible (30), avec un premier dispositif de transport (6), qui transporte un document original transparent (1) à travers le poste de copie (2), avec un deuxième dispositif de transport (31, 34) qui transporte le papier photosensible (30) dans un sens de transport à travers le poste de copie (2), et avec un dispositif de commande qui règle le transport du papier, la plate-forme positive comportant des moyens de rotation pour faire tourner le papier photosensible dans le plan du papier et des moyens pour faire effectuer un déplacement relatif du papier photosensible par rapport aux moyens de rotation dans le sens de transport, le dispositif de commande, les moyens de rotation et les moyens de déplacement relatif étant conçus de telle sorte que le papier photosensible peut être tourné dans le plan du papier autour d'un premier point et, après le déplacement relatif, tourné encore ou retourné autour d'un deuxième autre point dans le plan du papier de telle sorte que le papier photosensible, après la réalisation du mouvement de rotation et du mouvement relatif, est déplacé transversalement par rapport à la direction de transport.

13. Copieur photographique selon la revendication 12, **caractérisé en ce que** le premier dispositif de transport (6) et le deuxième dispositif de transport (31, 34) sont agencés parallèlement.

14. Copieur photographique selon la revendication 12, **caractérisé en ce qu'**il est prévu dans la plate-forme positive (13) un plateau tournant (34) qui est conçu aussi bien de manière à pouvoir tourner que de manière à pouvoir se déplacer dans le sens de transport du papier.

15. Copieur photographique selon la revendication 14, **caractérisé en ce que** le plateau tournant (34) peut se déplacer le long de la ligne médiane longitudinale du plan de transport du papier.
